# EUROPÄISCHE PATENTSCHRIFT

(11) **EP 0 353 684 B1**
(45) Veröffentlichungstag und Bekanntmachung des Hinweises auf die Patenterteilung: **13.10.1993**
(21) Anmeldenummer: 89114089.9
(22) Anmeldetag: 31.07.1989
(51) Int. Cl.: B61D 37/00, B61D 33/00, B60N 3/02

(54) **Befestigung von Haltestangen und Sitzgestellen in Fahrzeugen**
Attachment for hand rails and seats in vehicles
Fixation de mains courantes et de sièges dans des véhicules

(30) Priorität: 04.08.1988 DE 3826470
(43) Veröffentlichungstag der Anmeldung: 07.02.1990
(73) Patentinhaber: ABB HENSCHEL WAGGON UNION GmbH, D-13509 Berlin (DE)
(72) Erfinder: Kramer, Rolf, Dipl.-Ing., D-5900 Siegen 21 (DE); Kühnel, Arne, Dr.-Ing., D-1000 Berlin 45 (DE); Veit, Emil, Dipl.-Ing., D-1000 Berlin 12 (DE)
(74) Vertreter: Fritsch, Klaus

(56) Entgegenhaltungen:
- DE-A- 2 349 828
- DE-A- 2 719 455
- US-A- 2 589 922

## Beschreibung

Die Erfindung betrifft die Befestigung von Haltestangen und Sitzgestellen in Fahrzeugen, insbesondere Schienenfahrzeugen, an einem ortsfesten Teil im Fahrgastraum (zum Beispiel Fußboden oder Seitenwand).

Haltestangen und Sitzgestelle werden insbesondere in Schienenfahrzeugen zum Personentransport üblicherweise an einem ortsfesten Teil im Fahrgastraum, zum Beispiel am Fußboden oder der Seitenwand dadurch befestigt, daß die Haltestange in einen topf- oder bundflanschförmigen Fuß verdrehfest gehaltert und dieser mittels Schrauben im Fußboden oder an der Seitenwand befestigt werden. siehe zum Beispiel DE-A- 2719455 Sitzgestelle werden entweder direkt oder unter Zwischenschaltung von Schienen ebenfalls mittels Schrauben am Fußboden oder der Seitenwand befestigt. Bei Veränderung der Sitzeinteilung oder der Anordnung der Haltestangen müssen die ursprünglichen Löcher auf aufwendige Weise beseitigt und neue Löcher eventuell mit Gewinde angeordnet werden.

Die Aufgabe vorliegender Erfindung lag darin, zur Befestigung von Haltestangen und Sitzgestellen in Fahrzeugen, insbesondere Schienenfahrzeugen, eine Möglichkeit zu finden, die Zeit und Lohnkosten einspart und die eine variable Anordnung der Inneneinrichtung des Fahrgastraums ermöglicht und die Maßtoleranzen zwischen Aufstandsfläche und Druckfläche der Haltestange oder des Sitzgestells ausgeglichen werden.

Diese Aufgabe wird durch die Merkmale des kennzeichnenden Teils des Anspruchs 1 gelöst. Bei geneigt zu der Aufstandsfläche des Halteprofils verlaufender Druckfläche der Haltestange oder des Sitzgestells können Maßtoleranzen zwischen Aufstandsfläche und Druckfläche ausgeglichen werden.

Zur rutschfesten Verbindung der Haltestange oder des Sitzgestells mit dem Halteprofil sind weiter die Aufstandsfläche und der Fuß der Haltestange und des Sitzgestells auf ihrer Unterseite profiliert.

Der Haltenocken ist unterhalb der Aufstandsfläche an dem Halteprofil angeordnet und auf seiner Unterseite mit einer Abwinklung von mindestens 180° zu der Aufstandsfläche versehen. Durch diese Ausbildung und Anordnung des Haltenockens wird gewährleistet, daß das Klemmstück sicher an dem Halteprofil befestigt werden kann.

Der Haltenocken ist auf seiner Unterseite abgerundet. Durch diese Abrundung wird bei Höhendifferenzen zwischen Haltenocken und Druckfläche ein sicheres Anliegen des Klemmstücks am Haltenocken in jeder Stellung des Klemmstücks gewährleistet.

Einzelheiten der Erfindung werden anhand von Ausführungsbeispielen in der Zeichnung erläutert.

Es zeigen
Fig. 1 einen vertikalen Querschnitt durch eine Befestigung gemäß der Erfindung,
Fig. 2 den Schnitt nach Linie II-II der Fig. 1,
Fig. 3 ein zweites Ausführungsbeispiel der Befestigung gemäß der Erfindung im vertikalen Querschnitt.

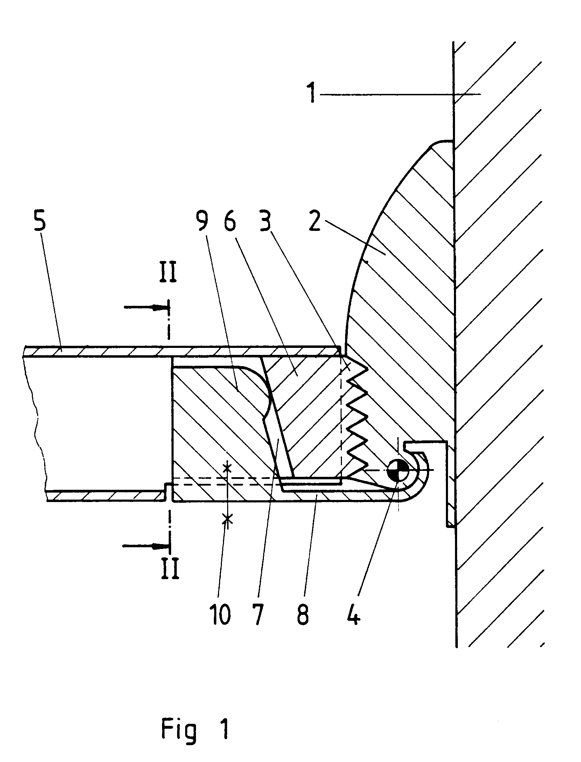

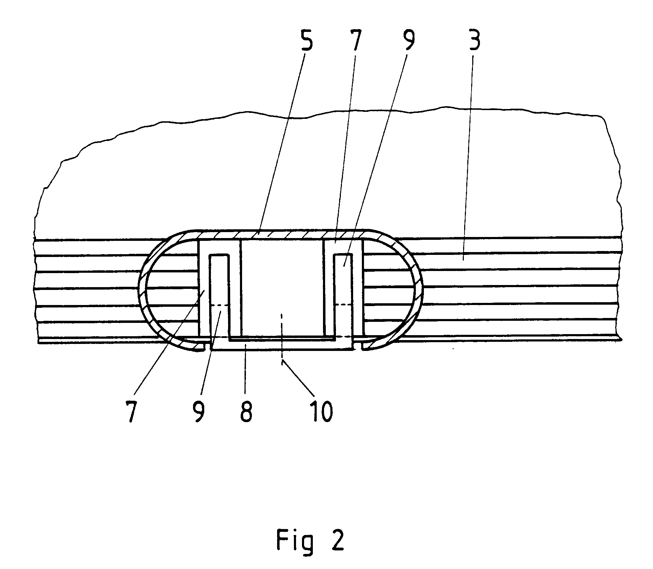

Bei dem in den Fig. 1 und 2 dargestellten Ausführungsbeispiel der Erfindung ist auf den Fußboden 1 im Fahrgastraum des Schienenfahrzeugs ein Halteprofil 2 mittels üblicher Befestigungsmittel aufgebracht. Das Halteprofil 2 ist dabei stabförmig ausgebildet und im Fahrgastraum des Schienenfahrzeugs längs angebracht. Auf seiner Oberseite weist das Halteprofil 2 eine Aufstandsfläche 3 auf. Diese Aufstandsfläche 3 ist geriffelt oder mit einer sonstigen Profilierung versehen. Das Halteprofil 2 ist einseitig abgewinkelt und weist an der abgewinkelten Seite einen Haltenocken 4 auf, der auf seiner Unterseite mit einer Abwinklung von größer als 180° zu der Aufstandsfläche 3 versehen ist. Der Haltenocken 4 ist dabei an seiner freien unteren Kante abgerundet. Auf der Aufstandsfläche 3 des Halteprofils 2 steht das Sitzgestell 5 eines Fahrgastsitzes mit einem Fuß 6 auf. Der Fuß 6 des Sitzgestells 5 ist dabei auf seiner Unterseite entsprechend der Auflagefläche 3 profiliert. Das Sitzgestell 5 weist weiter eine mit Abstand zu dem unteren Ende des Fußes 6 angeordnete Druckfläche 7 auf. Diese Druckfläche 7 ist mit Neigung zu dem Haltenocken 4 des Halteprofils 2 versehen. Gemäß einem anderen, nicht dargestellten Ausführungsbeispiel der Erfindung kann die Druckfläche jedoch auch parallel zu der Aufstandsfläche 3 des Halteprofils 2 ausgebildet sein. Ein in seinem vertikalen Querschnitt etwa C-förmig ausgebildetes Klemmstück 8 greift mit seinem unteren, hakenförmigen und deckungsgleich zu der Unterseite des Haltenockens 4 ausgebildeten Ende unter den Haltenocken 4. Das obere, ebenfalls hakenförmig ausgebildete Ende des Klemmstücks 8 liegt mit Drucknocken 9 auf der Druckfläche 7 des Sitzgestells 5 an. Das Klemmstück 8 ist dabei mittels Schrauben 10 an dem Sitzgestell 5 befestigt. Das Anzugsmoment der Schrauben 10 bestimmt die Anpreßkraft des Sitzgestells 5 auf die Auflagefläche 3 des Halteprofils 2. Es können jedoch auch andere Befestigungsmittel, beispielsweise Klammern oder Federn, verwendet werden. Über die Neigung der Druckfläche 7 können Maßdifferenzen innerhalb des Halteprofils 2 und des Fußes 6 des Sitzgestells 5 ausgeglichen werden.

Die Befestigung einer Haltestange im Fahrgastraum an einem ortsfesten Teil, zum Beispiel Fußboden oder Seitenwand erfolgt auf gleiche Weise wie die Befestigung des Sitzgestells 5 in vorliegend beschriebenem Ausführungsbeispiel.

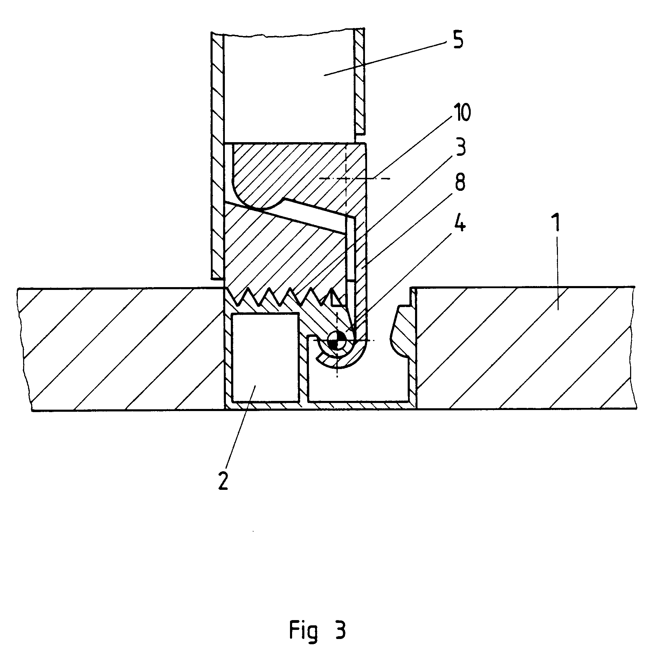

Bei dem in der Fig. 3 dargestellten Ausführungsbeispiel der Erfindung ist das Halteprofil 2 in den Fußboden 1 eingelassen. Die Ausbildung und Befestigung einer Haltestange oder eines Sitzgestells 5 erfolgt auf gleiche Weise wie in dem zu den Fig. 1 und 2 beschriebenen Ausführungsbeispiel. Das Klemmstück 8 ist ebenfalls identisch mit dem Klemmstück 8 der in den Fig.1 und 2 beschriebenen Ausführung.

## Patentansprüche

1. Vorrichtung zur Befestigung von Haltestangen und Sitzgestellen in Fahrzeugen, insbesondere Schienenfahrzeugen, an einem ortsfesten Teil (1), z. B. Fußboden oder Seitenwand in Fahrgasträumen, mit einem längs am ortsfesten Teil (1) angeordneten stabförmigen Halteprofil (2) mit einer Aufstands- oder Anschlußfläche (3) und einem wulstförmigen Haltenocken, an welche Aufstands- oder Anschlußfläche (3) die Haltestange oder das Sitzgestell (5) mit einem eine Druckfläche (7) aufweisenden Fußteil (6) angesetzt ist, wobei ein Klemmstück (8) vorgesehen ist, welches den wulstförmigen Haltenocken (4) hintergreift und mit dem Sitzgestell (5) oder der Haltestange verbunden ist, dadurch gekennzeichnet, daß das Klemmstück (8) mit Drucknocken (9) versehen ist, die sich an der Druckfläche (7) abstützen, und daß die Druckfläche (7) mit Neigung zum Haltenocken (4) versehen ist und so die Möglichkeit zum Ausgleich von Maßdifferenzen innerhalb des Halteprofils (2) und des Fußes (6) des Sitzgestells (5) oder der Haltestange bietet.

2. Befestigung nach Anspruch 1, **dadurch gekennzeichnet,** daß die Aufstandsfläche (3) und der Fuß (6) der Haltestange und des Sitzgestelles (5) auf ihrer Unterseite profiliert sind.

3. Befestigung nach den Ansprüchen 1 und 2, **dadurch gekennzeichnet,** daß der Haltenocken (4) unterhalb der Aufstandsfläche (3) an dem Halteprofil (2) angeordnet ist und auf seiner Unterseite mit einer Abwinklung von mindestens 180° zu der Aufstandsfläche (3) versehen ist.

4. Befestigung nach den Ansprüchen 1 bis 3**, dadurch gekennzeichnet,** daß die Unterseite des Haltenockens (4) abgerundet ist.

5. Befestigung nach den Ansprüchen 1 bis 4, **dadurch gekennzeichnet,** daß die Druckfläche (7) mit Abstand zu dem Fuß (6) an der Haltestange oder dem Sitzgestell (5) angeordnet ist.

6. Befestigung nach den Ansprüchen 1 bis 5, **dadurch gekennzeichnet,** daß das Klemmstück (8) im vertikalen Querschnitt etwa C-förmig ausgebildet ist, wobei der untere Haken des Klemmstücks (8) etwa deckungsgleich zu der Unterseite des Haltenockens (4) ausgebildet ist und der obere Haken gegen die Druckfläche (7) anliegende Drucknocken (9) aufweist.

## Claims

1. Device for fastening holding bars and seat frames in vehicles, particularly rail vehicles, to a stationary part (1), for example a floor or side wall in passenger compartments, which comprises a rod-like holding section (2) disposed longitudinally on the stationary part (1) and having a standing or connection surface (3) and a bead-shaped holding boss, on which standing or connection surface (3) the holding bar or the seat frame (5) is attached by a foot part (6) provided with a pressure surface (7), a clamp member (8) being provided, which engages behind the bead-shaped holding boss (4) and is joined to the seat frame (5) or the holding bar, characterised in that the clamp member (8) is provided with pressure bosses (9) which are supported on the pressure surface (7), and in that the pressure surface (7) is inclined relative to the holding boss (4) and thus makes it possible to compensate for differences in dimensions within the holding section (2) and the foot (6) of the seat frame (5) or the holding bar.

2. Fastening according to Claim 1, characterised in that the standing surface (3) and the foot (6) of the holding bar and of the seat frame (5) are profiled on their undersides.

3. Fastening according to Claims 1 and 2, characterised in that the holding boss (4) is disposed under the standing surface (3) on the holding section (2) and is provided on its underside with a bend of at least 180° relative to the standing surface (3).

4. Fastening according to Claims 1 to 3, characterised in that the underside of the holding boss (4) is rounded.

5. Fastening according to Claims 1 to 4, characterised in that the pressure surface (7) is disposed at a distance from the foot (6) on the holding bar or seat frame (5).

6. Fastening according to Claims 1 to 5, characterised in that the clamp member (8) has an approximately C-shaped vertical cross-section, the bottom hook of the clamp member (8) having a configuration approximately congruent with the underside of the holding boss (4) and the top hook being provided with pressure bosses (9) lying against the pressure surface (7).

## Revendications

1. Dispositif pour la fixation de barres, de mains courantes et d'ossatures de sièges dans des véhicules, en particulier des véhicules ferroviaires, sur une partie fixe (1), par exemple le plancher ou la paroi latérale de compartiments à voyageurs, dispositif comportant un élément profilé (2) en forme de barre qui est disposé longitudinalement sur la partie fixe (1) et présente une surface de pose ou de liaison (3) et un rebord en forme de bourrelet, surface de pose ou de liaison (3) sur laquelle la barre, la main courante ou l'ossature de siège (5) est montée par l'intermédiaire d'un pied (6) pourvu d'une surface de pression (7), un élément de blocage (8) qui s'engage derrière le rebord (4) en forme de bourrelet et est lié à l'ossature de siège (5) ou à la barre étant prévu, caractérisé par le fait que l'élément de blocage (8) est pourvu de cames de pression (9) qui prennent appui sur la surface de pression (7) et par le fait que la surface de pression (7) est inclinée en direction du rebord (4) et permet ainsi de compenser des différences dimensionnelles au niveau du profilé (2) et du pied (6) de l'ossature de siège (5), de la barre ou de la main courante.

2. Fixation selon la revendication 1, caractérisée par le fait que la face inférieure de la surface de pose (3) et le pied (6) de la barre, de la main courante ou de l'ossature de siège (5) sont profilées.

3. Fixation selon les revendications 1 et 2, caractérisée par le fait que le rebord (4) est agencé au-dessous de la surface de pose (3) du profilé (2) et est pourvu sur sa face inférieure d'une partie disposée à au moins 180° par rapport à la surface de pose (3).

4. Fixation selon les revendications 1 à 3, caractérisée par le fait que la face inférieure du rebord (4) est arrondie.

5. Fixation selon les revendications 1 à 4, caractérisée par le fait que la surface de pression (7) est disposée à distance du pied (6) sur la barre, la main courante ou l'ossature de siège (5).

6. Fixation selon les revendications 1 à 5, caractérisée par le fait que l'élément de blocage (8), en section droite verticale, a sensiblement la forme d'un C, le crochet inférieur de l'élément de blocage (8) étant sensiblement identique à la face inférieure du rebord (4) et le crochet supérieur comportant des came (9) qui sont appliquées contre la surface de pression (7).
